# EUROPÄISCHE PATENTSCHRIFT

(11) **EP 3 593 613 B1**
(45) Veröffentlichungstag und Bekanntmachung des Hinweises auf die Patenterteilung: **17.11.2021**
(21) Anmeldenummer: 19172796.5
(22) Anmeldetag: 06.05.2019
(51) Int. Cl.: A01B 69/04, A01D 41/127

(54) **VERFAHREN ZUR STEUERUNG EINER DATENÜBERTRAGUNG ZWISCHEN EINER LANDWIRTSCHAFTLICHEN ARBEITSMASCHINE UND EINER EXTERNEN SENDE-/EMPFANGSEINHEIT**
METHOD FOR CONTROLLING A DATA TRANSMISSION BETWEEN AN AGRICULTURAL MACHINE AND AN EXTERNAL TRANSMIT/RECEIVE UNIT
PROCÉDÉ DE COMMANDE D'UNE TRANSMISSION DE DONNÉES ENTRE UN ENGIN DE TRAVAIL AGRICOLE ET UNE UNITÉ D'ÉMISSION / DE RÉCEPTION EXTERNE

(30) Priorität: 11.07.2018 DE 102018116817
(43) Veröffentlichungstag der Anmeldung: 15.01.2020
(73) Patentinhaber: CLAAS Selbstfahrende Erntemaschinen GmbH, 33428 Harsewinkel (DE)
(72) Erfinder: Fischer, Frédéric, 59823 Arnsberg (DE); Kriebel, Bastian, 48155 Münster (DE)
(74) Vertreter: CLAAS Gruppe

(56) Entgegenhaltungen:
- EP-A1- 1 839 479
- CN-A- 107 613 751
- DE-A1-102004 055 275
- DE-A1-102006 019 216
- DE-A1-102017 203 950
- US-A1- 2017 131 959

## Beschreibung

Die vorliegende Anmeldung betrifft ein Verfahren zur Steuerung einer Datenübertragung zwischen einer fahrenden landwirtschaftlichen Arbeitsmaschine und mindestens einer externen Sende-/Empfangseinheit gemäß dem Oberbegriff von Anspruch 1.

Die fahrende Arbeitsmaschine bewegt sich dabei entlang einer Fahrroute, die einem vorgegebenen Routenplan folgt. Der Routenplan kann insbesondere derart beschaffen sein, dass eine jeweilige landwirtschaftliche Arbeitsfläche, auf der die Arbeitsmaschine eingesetzt wird, innerhalb einer möglichst kurzen Zeit vollständig überstrichen wird. Eine solche Fahrroute ist in aller Regel im Zuge der Bearbeitung der Arbeitsfläche gewünscht, beispielsweise bei der Bodenbearbeitung (Pflügen, Grubbern etc.), der Einsaat, der Ausbringung von Dünge- und Pflanzenschutzmitteln oder der Ernte von Früchten. Ein Routenplan für eine Arbeitsmaschine sieht typischerweise eine Bearbeitung der Arbeitsfläche in möglichst in sich geraden Arbeitsspuren vor. Ein Randbereich der Arbeitsfläche wird vorzugsweise mittels einer umlaufenden Vorgewendespur erschlossen, sodass der Arbeitsmaschine an den Enden der Arbeitsspuren Raum zur Ausführung einer Wende zur Verfügung steht. Auch ist eine spiralförmige Arbeitsspur denkbar, die sich entweder von einem Außenbereich der Arbeitsfläche sukzessiv in Richtung eines Mittelbereichs entwickelt oder umgekehrt. Der Routenplan kann insbesondere auch Informationen betreffend eine Fahrgeschwindigkeit der jeweiligen Arbeitsmaschine entlang ihrer Fahrroute beinhalten, wobei die Fahrgeschwindigkeit in verschiedenen Bereichen der Arbeitsfläche unterschiedlich sein kann und zudem von der Witterung und Bedingungen des Untergrundes abhängen können. Derartige Informationen können Teil des Routenplans sein.

Die Datenübertragung erfolgt mittels mindestens eines Mobilfunknetzes, wobei auf der Arbeitsmaschine eine Sende-/Empfangseinheit angeordnet ist, die mit mindestens einer externen, das heißt nicht auf der Erntemaschine angeordneten Sende-/Empfangseinheit, Daten austauscht. Der Datenaustausch kann in einem lediglichen Senden von Daten von der Arbeitsmaschine an die externe Sende-/Empfangseinheit, in einem lediglichen Empfangen von Daten, die von der externen Sende-/Empfangseinheit gesendet wurde, oder in einem kombinierten Senden und Empfangen bestehen.

Verfahren zur Steuerung einer Datenübertragung sind im Stand der Technik bereits bekannt. Hierzu wird beispielhaft auf die deutsche Offenlegungsschrift DE 10 2016 207 568 A1 hingewiesen. Diese betrifft ein Verfahren, das sich mit einer Datenübertragung befasst, die bei Vorliegen einer Unterbrechung einer Datenverbindung ausgeführt werden sollte. Für diesen Fall, dass im Moment der gewünschten Datenübertragung eine solche Unterbrechung vorliegt, werden die fraglichen Daten zunächst lokal zwischengespeichert, insbesondere auf einem mobilen Fahrzeug, und sodann direkt übertragen, sobald das Fahrzeug an einer Stelle gelangt, an der die Datenverbindung wieder gegeben ist. Auf diese Weise findet die Datenübertragung gewissermaßen zeitverzögert statt.

Weiterhin offenbart die deutsche Offenlegungsschrift DE 102 35 525 A1 eine Datenübertragung in Abhängigkeit davon vorzunehmen, welche Kosten für die Übertragung dieser Daten anfallen. Beispielsweise wird vorgeschlagen, eine Datenübertragung zeitabhängig zu steuern, sodass sie in einem Zeitraum fällt, in dem für die Übertragung von Daten eine geringstmögliche Vergütung an den Provider des jeweiligen Mobilfunknetzes zu entrichten ist, beispielsweise nachts. Auch ist beschrieben, eine Übertragung von Daten ortsabhängig vorzunehmen, wobei die Datenübertragung vorteilhafterweise an einem Ort erfolgen sollte, bei dem ein Mobilfunknetz verfügbar ist, dessen Nutzung möglichst geringe Kosten verursacht.

Aus der DE 10 2017 203950A1 ist eine Erntemaschine bekannt, die mittels Mobilfunk mit einem Remote-System kommuniziert.

Aus der DE 10 2004 055275A1 ist ein Verfahren zur Kommunikation bekannt, bei dem die Mobilfunkabdeckung auf einer geplanten Route berücksichtigt wird.

Aus der US 2017/131959 A1 ist eine landwirtschaftliche Arbeitsmaschine bekannt, wobei ein Steuerungssystem der Arbeitsmaschine die mittels Funk mit Sensoren kommuniziert.

Aus der DE 10 2006 019216 A1 ist eine, die mittels Funk mit einem Routenplanungssystem kommuniziert.

Aus der EP 1 839 479 A1 sind landwirtschaftliche Maschinen bekannt, die mittels Funk miteinander kommunizieren.

Aus der CN 107 613 751 A ist ein Routenplanungssystem bekannt, das aus den Fahrzeugpositionen beim Umfahren des Feldes die Kontur des Feldes bestimmt und Fahrtrouten berechnet.

Die vorliegende Anmeldung hat sich zur Aufgabe gestellt, ein Verfahren hervorzubringen, mittels dessen Daten, die zwischen einer landwirtschaftlichen Arbeitsmaschine und einer jeweiligen externen Sende-/Empfangseinheit ausgetauscht werden, so aktuell wie möglich zu halten.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den Unteransprüchen 2 bis 7.

Das erfindungsgemäße Verfahren ist dadurch gekennzeichnet, dass die Datenübertragung mittels einer Steuerungseinrichtung gesteuert wird. Die Steuerungseinrichtung kombiniert dabei Informationen aus mindestens einer der Arbeitsfläche zugeordneten Netzabdeckungskarte und dem Routenplan, entlang dessen die Fahrroute der Arbeitsmaschine verläuft. Die Netzabdeckungskarte beinhaltet Informationen darüber, in welcher Ausprägung ein jeweilig für die Datenübertragung genutztes Mobilfunknetz auf der Arbeitsfläche, auf der die Arbeitsmaschine sich bewegt, vorliegt. Insbesondere kann die Netzabdeckungskarte Informationen darüber enthalten, an welcher Stelle der Arbeitsfläche welche Datenübertragungsrate, die zur Übertragung von Daten zwischen der Arbeitsmaschine und einer jeweiligen externen Sende-/Empfangseinheit nutzbar ist, verfügbar ist. An Stellen, an denen diese Datenübertragungsrate den Wert Null annimmt, ist keine Abdeckung des jeweiligen Teils der Arbeitsfläche mit dem für die Datenübertragung genutzt Mobilfunknetz gegeben. An anderen Stellen mag dies jedoch sehr wohl der Fall sein, wobei grundsätzlich denkbar ist, dass die Netzabdeckungskarte nicht lediglich zwischen "Datenübertragung möglich" und "Datenübertragung unmöglich" unterscheidet, sondern konkrete Informationen betreffend die jeweils verfügbare Datenübertragungsrate enthält. Erfindungsgemäß kombiniert die Steuerungseinrichtung die Informationen aus der Netzabdeckungskarte und dem Routenplan der Arbeitsmaschine derart, dass mindestens eine Datenübertragung, vorzugsweise eine Vielzahl von Datenübertragungen, in Abhängigkeit einer Position der Arbeitsmaschine entlang ihrer Fahrroute vorgenommen wird.

Das erfindungsgemäße Verfahren hat viele Vorteile. Insbesondere ist es möglich, die Datenübertragung zwischen der Arbeitsmaschine und der externen Sende-/Empfangseinheit derart zu steuern, dass ein Zeitfenster, innerhalb dessen aufgrund fehlender Abdeckung zumindest eines Bereichs der jeweiligen Arbeitsfläche mit dem für die Datenübertragung genutzten Mobilfunknetz keine Datenübertragung vorgenommen wird, so kurz wie möglich gehalten wird. Mit anderen Worten wird die Steuerungseinrichtung mittels Zurverfügungstellens der Informationen betreffend die Netzabdeckungskarte und den Routenplan der Arbeitsmaschine in die Lage versetzt, zu prognostizieren wie lange sich die Arbeitsmaschine auf ihrer derzeitigen Fahrroute noch bewegen kann, bevor eine Datenübertragung aufgrund mangelnder Netzabdeckung unmöglich oder zumindest erschwert wird oder umgekehrt, wie lange es noch dauert, bis eine Datenübertragung wieder möglich ist und die Arbeitsmaschine eine Stelle der Arbeitsfläche entlang der Fahrroute erreicht, in der eine ausreichende Abdeckung mit dem Mobilfunknetz gegeben ist. Das erfindungsgemäße Verfahren hilft mithin, dazu beizutragen, dass zwischen der Arbeitsmaschine und der externen Sende-/Empfangseinheit übertragene Daten möglichst aktuell sind.

Dies kann für eine Vielzahl von Anwendungen von Interesse sein. Beispielsweise kann die Arbeitsmaschine mit mindestens einer Sensoreinrichtung bestückt sein, mittels derer mindestens ein Arbeitsparameter, beispielsweise die Feuchte von geerntetem Getreide oder die Beschaffenheit des Untergrundes, erfasst wird und diese Information sodann ausgehend von der Arbeitsmaschine mittels des Mobilfunknetzes an die externe Sende-/Empfangseinheit übertragen wird. Letztere kann die Informationen sodann weitergeben, sodass diese beispielsweise händisch oder automatisch ausgewertet und entsprechende Rückschlüsse für einen weiteren Arbeitsprozess gezogen werden können. Dies kann sowohl Arbeitsparameter der Arbeitsmaschine selbst als auch Arbeitsparameter weiterer Arbeitsmaschinen betreffen. Umgekehrt ist es ebenso denkbar, dass der Arbeitsmaschine ausgehend von der externen Sende-/Empfangseinheit zeitkritische Daten zur Verfügung gestellt werden, die sodann den weiteren Arbeitsablauf der Arbeitsmaschine beeinflussen können. Dies können sowohl Daten sein, die von einer Steuerung der Arbeitsmaschine automatisch verarbeitet werden, als auch solche, die händisch von einem Maschinenführer der Arbeitsmaschine verarbeitet werden. Das erfindungsgemäße Verfahren hilft dabei, jeweils übertragene Daten so aktuell wie möglich zu halten, sodass Entscheidungsgrundlagen für das weitere Vorgehen eines Arbeitsprozesses, beispielsweise eines Ernteprozesses, auf dem bestmöglichen Niveau gehalten werden. In jedem Fall führt das Verfahren dazu, dass eine Effizienz des Arbeitsprozesses optimiert werden kann.

Das Verfahren weiter ausgestaltend terminiert die Steuerungseinrichtung in Kenntnis eines Volumens eines jeweils zu übertragenden Datenpakets die Datenübertragung derart, dass die Datenübertragung vollständig abgeschlossen werden kann, bevor die Arbeitsmaschine einen Schlechtbereich der Arbeitsfläche erreicht, in dem gemäß der Netzabdeckungskarte für eine zuverlässige Datenübertragung keine hinreichende Abdeckung des Mobilfunknetzes vorliegt. Insbesondere kann die Steuerungseinrichtung die Datenübertragung so terminieren, dass der Abschluss der Datenübertragung, das heißt die vollständige Übertragung eines jeweiligen Datenpakets, möglichst zeitnah zum Übertritt der Arbeitsmaschine von einem Gutbereich der Arbeitsfläche hin zu dem Schlechtbereich ausführt, wobei in dem Gutbereich gemäß der Netzabdeckungskarte eine für eine zuverlässige Datenübertragung hinreichende Abdeckung des Mobilfunknetzes vorliegt und in dem Schlechtbereich gemäß der Netzabdeckungskarte für eine zuverlässige Datenübertragung keine hinreichende Abdeckung des Mobilfunknetzes vorliegt. Entscheidend ist dabei, dass die Datenübertragung rechtzeitig abgeschlossen wird, bevor die Arbeitsmaschine den Schlechtbereich erreicht, da die Datenübertragung dann nicht mehr abgeschlossen werden könnte und schlimmstenfalls für eine weitere Verarbeitung vollständig unbrauchbar wäre.

Somit ist es beispielsweise denkbar, dass die Arbeitsmaschine gemäß ihrem Routenplan, der auch Informationen betreffend die Fahrgeschwindigkeit der Arbeitsmaschine enthält, den nächsten Schlechtbereich der Arbeitsfläche in ca. 120 Sekunden erreichen wird. Die Übertragung eines jeweils zur Übertragung vorgesehenen Datenpakets wird gemäß von mittels der Netzabdeckungskarte zur Verfügung stehenden Informationen betreffend eine verfügbare Datenübertragungsrate in dem Gutbereich, in dem sich die Arbeitsmaschine noch aufhält, voraussichtlich 60 Sekunden in Anspruch nehmen. Die Steuerungseinrichtung terminiert in einem solchen Fall die Datenübertragung in beispielsweise 50 Sekunden, sodass die Datenübertragung planmäßig ca. 10 Sekunden vor Übertritt der Arbeitsmaschine in den Schlechtbereich der Arbeitsfläche abgeschlossen wird. Die restlichen 10 Sekunden stellen in diesem Beispiel einen Puffer für etwaige Unsicherheiten und Ungenauigkeiten dar.

Weiterhin kann das Verfahren dann besonders vorteilhaft sein, wenn mittels der Steuerungseinrichtung die Informationen aus der Netzabdeckungskarte und dem Routenplan der Arbeitsmaschine mit Informationen betreffend ein Volumen eines jeweils zu übertragenden Datenpakets kombiniert werden, wobei die Steuerungseinrichtung die Datenübertragung nur für den Fall initiiert, dass eine zu erwartende Aufenthaltszeit der Arbeitsmaschine in einem Gutbereich der Arbeitsfläche ausreicht, um das jeweilige Datenpaket vollständig zu übertragen, bevor die Arbeitsmaschine einen (nächsten) Schlechtbereich der Arbeitsfläche erreicht. Diese Verfahrensweise ist insbesondere dann vorteilhaft, wenn die Netzabdeckung auf der Arbeitsfläche derart kleinteilig ist, dass zumindest bereichsweise eine lediglich kurze, zusammenhängende Aufenthaltszeit der fahrenden Arbeitsmaschine in einem Gutbereich zu erwarten ist.

Beispielsweise ist es denkbar, dass die Arbeitsmaschine gemäß dem Routenplan entlang ihrer Fahrroute sich voraussichtlich lediglich für ca. 50 Sekunden in einem Gutbereich aufhalten wird, bevor sie wieder in einen Schlechtbereich übertritt. Die Datenübertragung würde für ein jeweiliges Datenpaket bei der gemäß der Netzabdeckungskarte in dem Gutbereich zur Verfügung stehenden Datenübertragungsrate des Mobilfunknetzes jedoch voraussichtlich ca. 60 Sekunden in Anspruch nehmen. In seinem solchen Fall registriert die Steuerungseinrichtung die Differenz von 10 Sekunden betreffend die ausreichende Verfügbarkeit des Mobilfunknetzes und die Dauer der Datenübertragung und initiiert daraufhin trotz zeitweiser Gegenwart der Arbeitsmaschine in dem Gutbereich die Datenübertragung nicht. Auch ist es denkbar, dass die Größe des Datenpakets reduziert wird, sodass die Übertragung eine geringere Zeitdauer in Anspruch nimmt und mithin doch noch innerhalb des verbleibenden, ursprünglich für zu kurz befundenen Zeitfensters erfolgen kann. Beispielsweise kann die Auflösung der Daten von 16 bit auf 8 bit reduziert werden.

In einer vorteilhaften Ausgestaltung des erfindungsgemäßen Verfahrens wird während der Fahrt der Arbeitsmaschine entlang ihrer Fahrroute eine Vielzahl einzelner Datenübertragungen vorgenommen. Insbesondere ist es denkbar, dass zumindest eine Mehrzahl solcher Datenübertragungen gemäß einem vorgegebenen Datenübertragungsplan durchgeführt wird. Ein solcher kann insbesondere eine zyklische, in bestimmten, vorzugsweise konstanten, Zeitabständen erfolgende Datenübertragung vorsehen. Alternativ oder zusätzlich ist es denkbar, dass eine Datenübertragung jeweils nach Zurücklegung einer bestimmten, vorzugsweise konstanten, Fahrdistanz der Arbeitsmaschine vorgenommen wird. Derartige Automatismen tragen dazu bei, dass die jeweils fraglichen Daten turnusmäßig aktualisiert werden, wobei vorteilhafterweise eine Überwachung und/oder ein aktiver Eingriff eines die Arbeitsmaschine führenden Maschinenführers nicht erforderlich ist.

Gemäß dem Gegenstand des Anspruchs 1 wird mindestens eine Datenübertragung, vorzugsweise eine Vielzahl von Datenübertragungen, derart mittels der Steuerungseinrichtung geplant, dass die jeweilige Datenübertragung unmittelbar vor einem Übertritt der Arbeitsmaschine von einem Gutbereich der Arbeitsfläche in einen Schlechtbereich der Arbeitsfläche abgeschlossen wird. Vorzugsweise beträgt eine Dauer eines Pufferzeitraums, der vorteilhafterweise sicherheitshalber zwischen voraussichtlichem Abschluss der Datenübertragung und Übertritt in den Schlechtbereich vorgesehen wird, maximal 30 Sekunden, vorzugsweise maximal 20 Sekunden, weiter vorzugsweise maximal 10 Sekunden. Der "Gutbereich" der Arbeitsfläche bezeichnet einen solchen, in dem gemäß der gegebenen Netzabdeckungskarte eine zuverlässige Datenübertragung möglich ist, da eine hinreichende Abdeckung der Arbeitsfläche mit dem Mobilfunknetz vorliegt. Im Gegensatz hierzu ist der "Schlechtbereich" dadurch gekennzeichnet, dass in diesem Bereich der Arbeitsfläche gemäß der Netzabdeckungskarte für eine zuverlässige Datenübertragung keine hinreichende Abdeckung des Mobilfunknetzes gegeben ist.

Umgekehrt ist es ebenso von besonderem Vorteil, wenn mindestens eine Datenübertragung, vorzugsweise eine Vielzahl von Datenübertragungen, derart mittels der Steuerungseinrichtung geplant wird, dass sie unmittelbar nach einem Übertritt der Arbeitsmaschine von einen Schlechtbereich der Arbeitsfläche in einen Gutbereich der Arbeitsfläche begonnen wird. Vorteilhafterweise werden die beschriebenen Verfahrensschritte kombiniert angewendet.

Die Steuerung der Datenübertragung in der vorstehend beschriebenen Weise ist insbesondere dann von Vorteil, wenn die Datenübertragung im Übrigen nach einem fixen Datenübertragungsplan vorgenommen wird, beispielsweise nach einem Zeitplan. Bei Beibehaltung eines solchen starren Zeitplans ist es für den Fall, dass zumindest ein Teil der Arbeitsfläche von einem Schlechtbereich gebildet ist, fast unausweichlich, dass mindestens eine Datenübertragung zu einem Zeitpunkt turnusmäßig ausgeführt werden soll, während sich die Arbeitsmaschine in diesem Schlechtbereich befindet. Die Datenübertragung wird entsprechend scheitern, sodass der letzte aktuelle Datensatz von der letzten erfolgreichen Datenübertragung stammt, als sich die Arbeitsmaschine noch in dem Gutbereich der Arbeitsfläche aufgehalten hat. Diese letzte Datenübertragung kann jedoch bereits lange vor einem Zeitpunkt erfolgt sein, zu dem die Arbeitsmaschine von dem Gutbereich der jeweiligen Arbeitsfläche in deren Schlechtbereich übergetreten ist. Mithin wäre es eigentlich noch möglich gewesen, einen zumindest aktuelleren Datensatz als den verfügbaren zu übertragen, wenn die Datenübertragung unmittelbar vor dem Übertritt durchgeführt worden wäre. Umgekehrt führt die Übertragung von Daten unmittelbar nach einem Übertritt von dem Schlechtbereich in den Gutbereich dazu, dass ein jeweiliger Datensatz sobald wie möglich wieder aktualisiert wird, sodass ein ansonsten gemäß einem fixen Datenübertragungsplan noch ausstehender Zeitraum bis zur nächsten Datenübertragung nicht ungenutzt verstreicht. Die genannte Vorgehensweise führt mithin im Ergebnis dazu, dass zumindest im Wesentlichen eine Datenübertragung zwischen der Arbeitsmaschine und einer jeweiligen externen Sende-/Empfangseinheit nur für genau einen solchen Zeitraum ausgesetzt ist, in dem eine Datenübertragung aufgrund mangelnder Netzabdeckung mit dem jeweiligen Mobilfunknetz technisch ohnehin nicht möglich gewesen wäre. Auf diese Weise werden die Daten so aktuell wie möglich gehalten.

Die Steuerungseinrichtung, mittels derer die Datenübertragung gesteuert wird, kann auf der Arbeitsmaschine oder extern, das heißt abseits der Arbeitsmaschine angeordnet sein.

Für die Planung einer jeweiligen Datenübertragung kann es besonders vorteilhaft sein, wenn Positionsdaten betreffend eine aktuelle Position der Arbeitsmaschine erhoben werden und diese der Steuerungseinrichtung zur Verfügung gestellt werden. Insbesondere kann die Arbeitsmaschine mit einer Positionierungseinrichtung ausgestattet sein, die beispielsweise auf ein globales Positionierungssystem wie GPS, GALILEO, BeiDou und dergleichen zurückgreift. Die Positionsdaten werden von der Steuerungseinrichtung verarbeitet. Alternativ oder zusätzlich ist die Erhebung und Zurverfügungstellung von Daten betreffend eine tatsächliche Fahrgeschwindigkeit der Arbeitsmaschine denkbar. Diese kann dazu verwendet werden, Zeiträume bis zur nächsten Änderung einer Übertragungssituation hinsichtlich anstehender Datenübertragungen so genau wie möglich abzuschätzen.

In einer weiterhin vorteilhaften Ausgestaltung des erfindungsgemäßen Verfahrens wird der Routenplan mittels der Steuerungseinrichtung dynamisch verändert. Insbesondere ist es denkbar, dass der Routenplan in Abhängigkeit von sich ergebenden Arbeitsparametern verändert wird, beispielsweise einem Zustand des Untergrundes oder einem Betriebsparameter der Arbeitsmaschine. Auch ist es denkbar, dass mittels entsprechender Sensoreinrichtungen an der Arbeitsmaschine Hindernisse erkannt werden, entsprechende Daten an die externe Sende-/Empfangseinheit übertragen werden und sodann dort zur Auswertung bereitstehen. Das Ergebnis einer solchen Auswertung kann darin bestehen, dass der Routenplan der Arbeitsmaschine angepasst wird, um in geeigneter Weise auf das Hindernis zu reagieren. Eine entsprechende Information wird mittels der externen Sende-/Empfangseinheit an die Arbeitsmaschine übertragen und dort umgesetzt.

Unabhängig von dem vorstehend beschriebenen erfindungsgemäßen Verfahren ist es besonders vorteilhaft, wenn mittels der Arbeitsmaschine im Zuge ihrer Bewegung entlang ihrer Fahrroute an mindestens einer Erhebungsstelle, vorzugsweise eine Mehrzahl von Erhebungsstellen, Informationen betreffend eine verfügbare Datenübertragungsrate erhebt, die in dem jeweilig genutzten Mobilfunknetz zur Verfügung steht. Die jeweiligen Erhebungsstellen, an denen die Informationen betreffend die verfügbare Datenübertragungsrate erhoben werden, werden sodann mit der erhobenen Datenübertragungsrate in Beziehung gesetzt, sodass sich eine Netzabdeckungskarte ergibt. Letztere gibt darüber Aufschluss, an welchen Stellen der Arbeitsfläche welche Datenübertragungsrate verfügbar ist. Dieses Verfahren kann insbesondere in Kombination mit dem vorstehend beschriebenen Verfahren durchgeführt werden. Das Ergebnis, nämlich das Vorliegen einer Netzabdeckungskarte, ist für die Durchführung des erfindungsgemäßen Verfahrens von besonderer Bedeutung, da die Steuerung einer Datenübertragung lediglich in Kenntnis der verfügbaren Netzabdeckung auf der Arbeitsfläche erfolgen kann. Grundsätzlich ist es denkbar, der Steuerungseinrichtung eine bereits zuvor erstellte Netzabdeckungskarte zur Verfügung zu stellen. Die Erstellung zumindest einer weiteren, aktualisierten Netzabdeckungskarte während eines jeweiligen Arbeitsprozesses mittels der Arbeitsmaschine bietet hierbei den Vorteil, dass Informationen betreffend die Netzabdeckung des Mobilfunknetzes so aktuell wie möglich gehalten werden. Umso aktueller die Netzabdeckungskarte ist, desto genauer kann mittels der Steuerungseinrichtung die Datenübertragung gesteuert werden.

Vorteilhafterweise wird die Netzabdeckungskarte mittels Interpolation zwischen Informationen betreffend die verfügbare Datenübertragungsrate erstellt, die an diskreten Erhebungsstellen der Arbeitsfläche erhoben wurden. Die Interpolation ermöglicht es, in besonders einfacher Weise die Netzabdeckungskarte für die gesamte Arbeitsfläche zu erstellen, ohne dass für jede Stelle der Arbeitsfläche eine gesonderte Erhebung der verfügbaren Datenübertragungsrate stattfinden muss. Die Interpolation kann vorteilhafterweise in Form einer nearest-neighbour Interpolation, einer linearen, quadratischen oder kubischen Interpolation oder einer Spline-Interpolation vorgenommen werden.

Vorteilhafterweise wird die Arbeitsfläche in ein Raster eingeteilt, dass eine Vielzahl von Feldern umfasst, die mittels Rasterlinien voneinander getrennt sind. Die Netzabdeckungskarte kann sodann in einer Auflösung erstellt werden, die für jedes Feld des Rasters einen Wert betreffend die verfügbare Datenübertragungsrate vorsieht. Vorteilhafterweise sind die Rasterlinien in einem solchen Abstand zueinander angeordnet, der zumindest im Wesentlichen eine Arbeitsbreite der jeweiligen Arbeitsmaschine entspricht. Auf diese Weise wird erreicht, dass das Raster bzw. dessen Felder zumindest im Wesentlichen mit der Fahrroute der Arbeitsmaschine korrespondieren, entlang derer sich die Arbeitsmaschine auf der Arbeitsfläche bewegt. Somit ist es beispielsweise denkbar, dass eine Arbeitsfläche, zu deren vollständigem Überstreichen es notwendig ist, dass die Arbeitsmaschine 20 nebeneinander angeordnete Arbeitsspuren abfährt, in ein solches Raster eingeteilt wird, dass über die Breite der Arbeitsfläche hinweg 20 Felder aufweist. Die Breite eines jeden Feldes korrespondiert sodann mit der Arbeitsbreite der Arbeitsmaschine.

Das erfindungsgemäße Verfahren ist nachstehend anhand eines Ausführungsbeispiels, das in den Figuren dargestellt ist, näher erläutert. Es zeigt:
- Fig. 1:: Eine schematische Draufsicht einer landwirtschaftlichen Arbeitsfläche,
- Fig. 2:: Die Arbeitsfläche gemäß Figur 1, wobei die Arbeitsfläche in ein Raster unterteilt ist,
- Fig. 3:: Die in das Raster unterteilte Arbeitsfläche gemäß Figur 2, wobei an Erhebungsstellen Informationen über eine verfügbare Datenübertragungsrate erhoben sind,
- Fig. 4:: Die in das Raster unterteilte Arbeitsfläche gemäß Figur 3, wobei Feldern des Rasters, die zwischen den Erhebungsstellen liegen, Informationen über die Datenübertragungsrate interpoliert sind,
- Fig. 5:: Die in das Raster unterteilte Arbeitsfläche gemäß Figur 4, wobei jeweils eine Vielzahl von Feldern des Rasters zu Bereichen zusammengefasst sind, und
- Fig. 6:: Die in das Raster unterteilte Arbeitsfläche gemäß Figur 5, wobei in Abhängigkeit von Bereichsgrenzen betreffend eine Netzabdeckung Übertragungsstellen definiert sind.

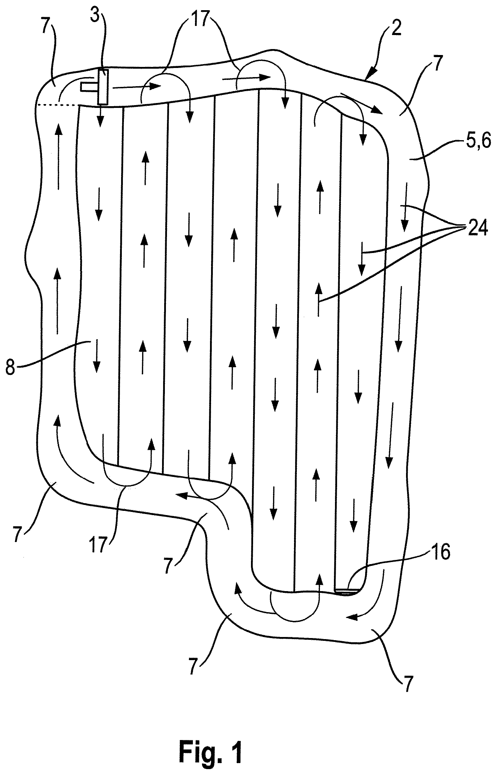

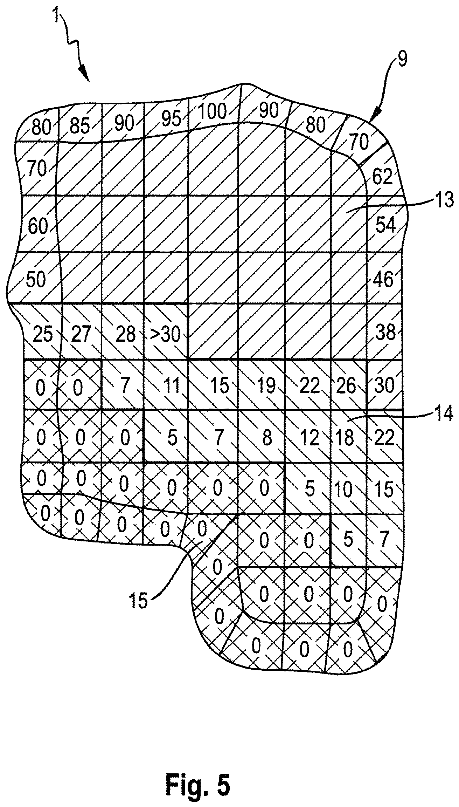

Das Ausführungsbeispiel, das in den **Figuren 1 bis 6** dargestellt ist, beschreibt den Ablauf eines Verfahrens zur Erstellung einer Netzabdeckungskarte **1** eines Mobilfunknetzes mittels einer landwirtschaftlichen Arbeitsmaschine **3** sowie ein Verfahren zur Steuerung einer Datenübertragung zwischen der Arbeitsmaschine **3** und einer externen Sende-/Empfangseinheit. Letztere ist in den Figuren nicht dargestellt.

Die Netzabdeckungskarte **1** wird betreffend eine landwirtschaftliche Arbeitsfläche **2** erstellt, auf der die Arbeitsmaschine **3** zum Einsatz kommt. In dem vorliegenden Beispiel handelt es sich bei der Arbeitsfläche **2** um einen landwirtschaftlichen Acker, auf dem Weizen angebaut ist, der nunmehr zur Ernte reif ist. Die landwirtschaftliche Arbeitsmaschine **3** ist hier von einem Mähdrescher gebildet.

Die Arbeitsmaschine **3** ist in dem gezeigten Beispiel mit einer nicht dargestellten Sende-/Empfangseinheit ausgestattet, mittels derer es möglich ist, innerhalb mindestens eines Mobilfunknetzes, dessen Abdeckung erhoben werden soll, Daten zu übertragen. Eine derartige Datenübertragung findet zwischen der Arbeitsmaschine **3** und einer externen Sende-/Empfangseinheit statt, die beispielsweise ortsfest auf einem zugehörigen landwirtschaftlichen Betrieb vorahnden sein kann. Ebenfalls ist es denkbar, dass die externe Sende-/Empfangseinheit auf einer anderen fahrbaren Arbeitsmaschine angeordnet ist. Selbstverständlich ist es ebenso denkbar, dass eine Datenübertragung mit einer Mehrzahl von externen Sende-/Empfangseinheiten erfolgt.

Für die in **Figur 1** dargestellte landwirtschaftliche Arbeitsfläche **2** existiert bislang noch keine Netzabdeckungskarte, sodass grundsätzlich unbekannt ist, in welchen Bereichen der Arbeitsfläche **2** eine Abdeckung mit dem Mobilfunknetz vorliegt, über das die gewünschte Datenübertragung zwischen der Arbeitsmaschine **3** und der externen Sende-/Empfangseinheit stattfinden soll. Die Arbeitsmaschine **3** fährt auf der Arbeitsfläche **2** zunächst eine umlaufende Vorgewendespur **5** ab, die hier einer Randspur **6** der Arbeitsfläche **2** entspricht. Die Arbeitsfläche **2** ist mittels dieser Randspur **6** umlaufend eingefasst, wobei Bereiche, die jenseits der Randspur **6** liegen, nicht zu der Arbeitsfläche **2** gehören. Entlang der Randspur **6** bzw. Vorgewendespur **5** ist die Arbeitsfläche **2** durch eine Mehrzahl von Ecken **7** begrenzt, an denen die Randspur **6** vergleichsweise schlagartig ihre Richtung ändert. Die Ecken **6** bewirken mithin, dass die Arbeitsmaschine **3** eine deutliche Lenkbewegung ausführen muss, um auf der Randspur **6** zu bleiben. Nach dem Abfahren der Randspur **6** geht die Arbeitsmaschine **3** dazu über, die verbliebene Arbeitsfläche **2** schematisch in geraden Arbeitsspuren **8** abzuarbeiten, wobei die Arbeitsmaschine **3** nach Erreichen eines Endes einer jeweiligen Arbeitsspur **8** eine Wende **17** ausführt und sodann die jeweils nächste Arbeitsspur **8** bearbeitet. Für die Wende **17** wird der mittels Bearbeitung der Randspur **6** geschaffene Raum genutzt. Nach vollständigem Überstreichen der gesamten Arbeitsfläche **2** erreicht die Arbeitsmaschine **3** ihr Bearbeitungsende **16.** Die beschrieben Bewegung der Arbeitsmaschine **3** auf der Arbeitsfläche **2** entspricht insgesamt einer Fahrroute **24** der Arbeitsmaschine **3,** die einem vorgegebenen Routenplan folgt.

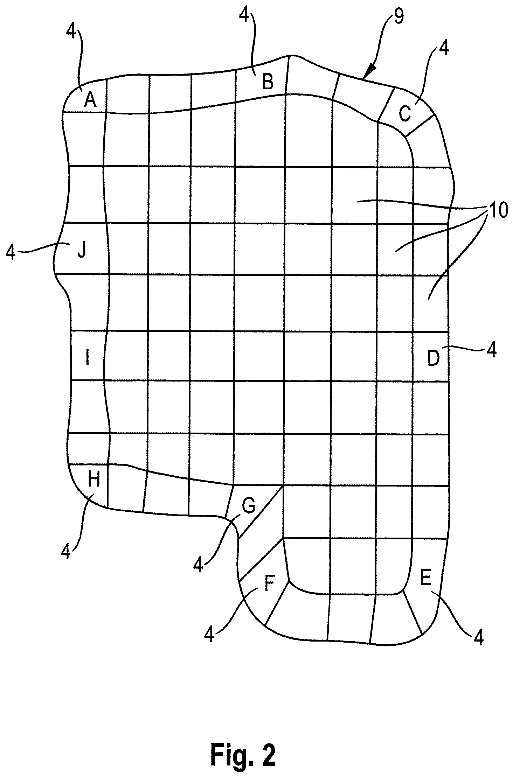

Eine Geometrie der Arbeitsfläche **2** ist grundsätzlich unabhängig von der Abdeckung der Arbeitsfläche **2** mit dem jeweiligen Mobilfunknetz bekannt. Zwecks Erstellung der gewünschten Netzabdeckungskarte **1** wird in dem gezeigten Beispiel die Arbeitsfläche **2** zunächst in ein Raster **9** unterteilt, das von einer Vielzahl einzelner Felder **10** gebildet ist. Diese Felder **10** sind hier soweit möglich viereckig gebildet, sodass das Raster **9** möglichst gleichmäßig aufgeteilt ist. Zwecks Erhebung erster Informationen betreffend die verfügbare Datenübertragungsrate in dem jeweiligen Mobilfunknetz werden in dem gezeigten Beispiel im Vorfeld des Bearbeitens der Arbeitsfläche **2** Erhebungsstellen **4** festgelegt, an denen im Zuge des Abfahrens der Vorgewendespur **5** bzw. der Randspur **6** besagte Informationen erhoben werden sollen. Diese Erhebungsstellen **4** sind in **Figur 2** mittels der Buchstaben **A** bis **J** dargestellt.

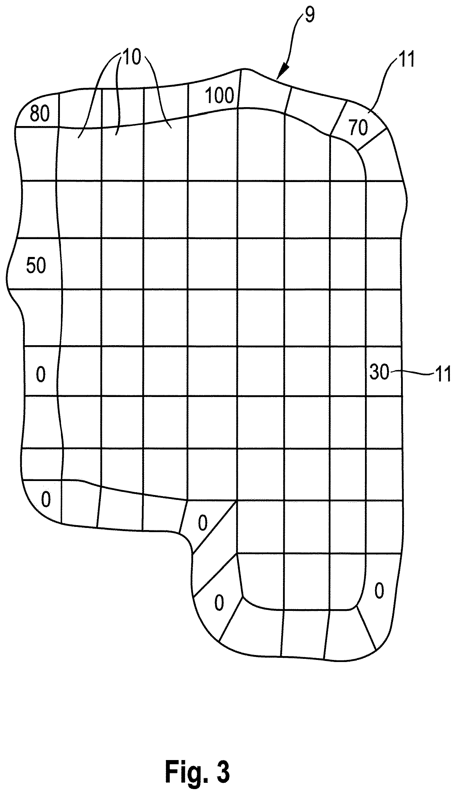

An den einzelnen Erhebungsstellen **4** werden mittels der Sende-/Empfangseinheit, die auf der Arbeitsmaschine **3** installiert ist, Datenübertragungen über das jeweilige Mobilfunknetz durchgeführt, wobei ermittelt wird, mit welcher Datenübertragungsrate besagte Datenübertragung erfolgt. Das jeweilige Ergebnis kann in verschiedener Weise veranschaulicht werden, beispielsweise mittels Festhaltens der erreichten Datenübertragungsrate in Mbit/s. In dem gezeigten Beispiel wird so vorgegangen, dass eine maximal erreichbare Datenübertragungsrate in dem jeweiligen Mobilfunknetz im Vorfeld als Information vorgegeben wird, woraufhin die Information betreffend die verfügbare Datenübertragungsrate an einer jeweiligen Erhebungsstelle **4** prozentual bezogen auf die vorgegebene maximal erreichbare Datenübertragungsrate dokumentiert wird. In dem gezeigten Beispiel werden an insgesamt zehn Erhebungsstellen **4** gleichermaßen zehn Erhebungswerte **11** festgehalten, die jeweils einem Feld **10** des Rasters **9**, innerhalb dessen sich die jeweilige Erhebungsstelle **4** befindet, zugeordnet werden. Wie sich anhand von **Figur 3** ergibt, wurden in dem gezeigten Beispiel beispielsweise an der Erhebungsstelle **C** eine Datenübertragungsrate in Höhe von 70 %, an der Erhebungsstelle **F** 0 % der maximal erreichbaren Datenübertragungsrate ermittelt. Die Werte für die anderen Erhebungsstellen **4** ergeben sich wie in **Figur 3** veranschaulicht.

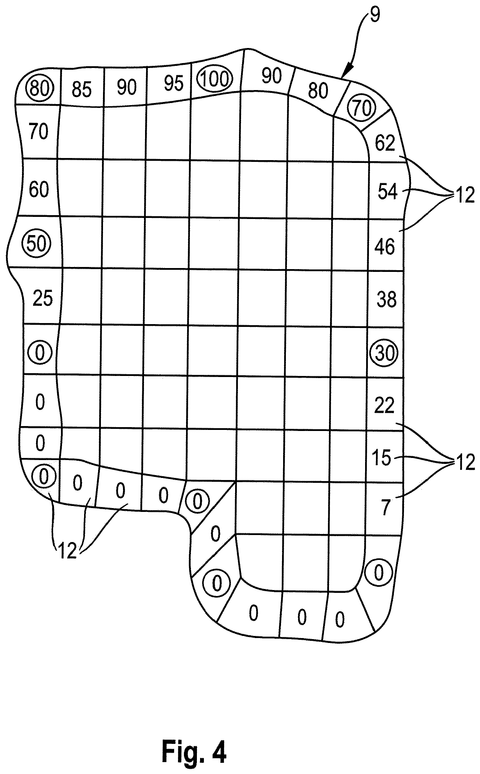

In einem weiteren Verfahrensschritt werden für die Felder **10,** in denen sich keine der Erhebungsstellen **4** befindet, Interpolationswerte **12** betreffend die dort verfügbare Datenübertragungsrate mittels Interpolation zwischen den Erhebungswerten **11** ermittelt. Die Interpolation findet hier beispielhaft linear statt. Eine Darstellung der so ermittelten Interpolationswert **12** ist in **Figur 4** beispielhaft für einen umlaufenden Rand des Rasters **9**, der im Wesentlichen der Randspur **6** der Arbeitsfläche **2** entspricht, dargestellt. Die Erhebungswerte **11,** die im Unterschied zu den Interpolationswerten **12** tatsächlich messtechnisch erhoben wurden, sind in **Figur 4** eingekreist dargestellt. Vorteilhafterweise kann die Erhebung von Informationen betreffend die verfügbare Datenübertragungsrate während des gesamten Arbeitsprozesses fortgesetzt werden, wodurch fortwährend weitere Erhebungsstellen **4** mit zugeordneten Erhebungswerten **11** erzeugt werden. Die Interpolationswerte **12** können entsprechend fortwährend angepasst werden, sodass im Zuge des Abfahrens der Fahrroute **24** die Genauigkeit der während des Arbeitsprozesses dynamisch erstellten Netzabdeckungskarte **1** sukzessive zunimmt.

Eine Erstellung der Netzabdeckungskarte **1** in einer ersten Näherung ist bereits mit den gemäß **Figur 4** vorliegenden Erhebungswerten **11** bzw. Interpolationswerten **12** möglich. Hierzu ist es lediglich erforderlich, für die Felder **10** des Rasters **9**, denen noch kein Wert betreffend die verfügbare Datenübertragungsrate zugewiesen worden ist, ebenfalls eine Interpolation zwischen den Erhebungswerten **11** und den Interpolationswerten **12** vorzunehmen, die in dem Randbereich des Rasters **9** gemäß **Figur 4** vorliegen.

In dem gezeigten Beispiel wird im Weiteren derart verfahren, dass eine entsprechende Interpolation vorgenommen wird, wobei daraufhin drei verschiedene Bereiche des Rasters **9** definiert werden. Der erste Bereich beschreibt einen Gutbereich **13**, innerhalb dessen die verfügbare Datenübertragungsrate größer oder gleich 30 % der maximal erreichbaren Übertragungsrate liegt. Innerhalb dieses Gutbereichs **13** sollte es ohne Weiteres möglich sein, zuverlässig sowie mit ausreichender Geschwindigkeit Daten zwischen der Arbeitsmaschine **3** und der jeweiligen externen Sende-/Empfangseinheit zu übertragen. Weiterhin ergibt sich ein Schlechtbereich **14**, innerhalb dessen eine Übertragung von Daten zwar grundsätzlich möglich ist, jedoch die Datenübertragungsrate unterhalb von 30 % der maximal erreichbaren Datenübertragungsrate liegt. Innerhalb dieses Schlechtbereichs **14** ist es grundsätzlich möglich, Daten zwischen der Arbeitsmaschine **3** und der externen Sende-/Empfangseinheit zu übertragen, hierbei ist jedoch zu beachten, dass die verfügbare Datenübertragungsrate vergleichsweise gering ist, sodass eine Übertragung von Daten, die ein größeres Volumen aufweisen, innerhalb des Schlechtbereichs **14** nur eingeschränkt oder sogar gar nicht möglich wäre. Schließlich weist das Raster **9** einen Todbereich **15** auf, innerhalb dessen keine Datenübertragung möglich ist; hier wurde über alle Felder **10** des Todbereichs **15** hinweg eine Datenübertragungsrate von 0 ermittelt.

Das auf diese Weise aufgestellte Raster **9** bildet mithin die Netzabdeckungskarte **1** für die mit dem Raster **9** assoziierte landwirtschaftliche Arbeitsfläche **2**. Die so erstellte Netzabdeckungskarte **1** liefert eine besonders hohe Auflösung betreffend die Abdeckung der Arbeitsfläche **2** mit dem jeweiligen Mobilfunknetz. Unter Zuhilfenahme der Netzabdeckungskarte **1** ist es nunmehr möglich, Übertragungen von Daten zwischen der Arbeitsmaschine **3** und einer jeweiligen externen Sende-/Empfangseinheit mittels einer Steuerungseinrichtung zu steuern. Hierbei kann insbesondere berücksichtigt werden, dass eine jeweilig verfügbare Datenübertragungsrate in verschiedenen Bereichen der Arbeitsfläche **2** unterschiedlich ist, sodass die Übertragung von Daten gezielt geplant und ausgeführt werden kann.

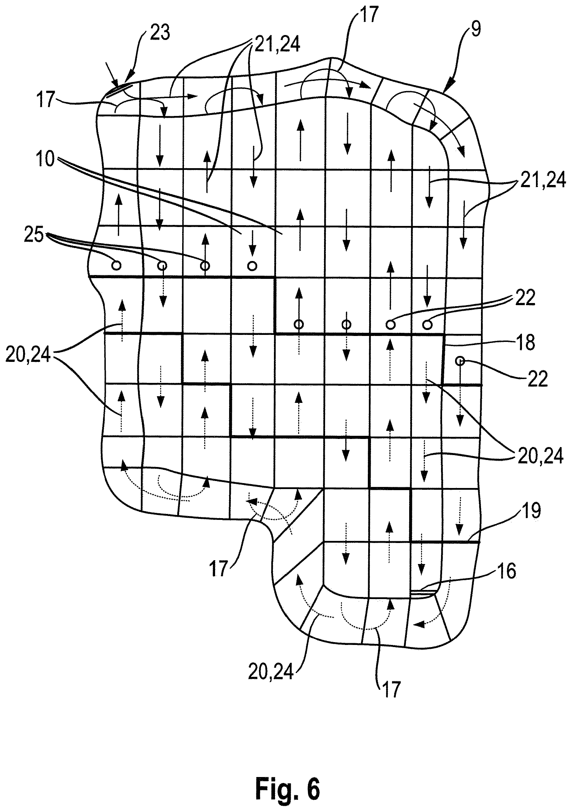

Die gesteuerte Datenübertragung zwischen der Arbeitsmaschine **3** und der externen Sende-/Empfangseinheit ist in **Figur 6** veranschaulicht. Letztere stellt eine Fahrroute **24** der Arbeitsmaschine **3** auf der Arbeitsfläche **2** dar, wobei die Arbeitsfläche **2** hier mittels des Rasters **9** veranschaulicht ist. Die Aufteilung des Rasters **9** orientiert sich an der Randspur **6** sowie den Arbeitsspuren **8** der Arbeitsmaschine **3**. In dem gezeigten Beispiel ist eine Datenübertragung zwischen der Arbeitsmaschine **3** und der externen Sende-/Empfangseinheit gewünscht, bei der derart voluminöse Datensätze ausgetauscht werden, dass eine zuverlässige Übertragung dieser Datensätze lediglich innerhalb des Gutbereichs **13** möglich ist, der hier anhand der verfügbaren Datenübertragungsrate in Abhängigkeit von einer maximal erreichbaren Datenübertragungsrate definiert ist. Innerhalb des Gutbereichs beträgt die verfügbare Datenübertragungsrate mindestens 30 % der maximal erreichbaren Datenübertragungsrate innerhalb des jeweiligen Mobilfunknetzes. Mithin fällt eine Übertragung von Daten sowohl innerhalb des Schlechtbereichs **14** als auch ohnehin innerhalb des Todbereichs **15** aus. Teile der Fahrroute **24**, die sich innerhalb des Gutbereichs **13** bewegen, sind in **Figur 6** mittels durchgezogener Pfeile **21** dargestellt, während Teile der Fahrroute **24**, die sich innerhalb des Schlechtbereichs **14** sowie des Todbereichs **15** bewegen, mittels gestrichelter Pfeile **20** veranschaulicht sind. Der Gutbereich **13** und der Schlechtbereich **14** sind entlang einer sich an den Feldern **10** des Rasters **9** verlaufenden Gutgrenze **18** voneinander getrennt, die in **Figur 6** entsprechend dargestellt ist. Wenngleich in dem vorliegenden Beispiel lediglich von untergeordneter Bedeutung, sind zudem ferner der Schlechtbereich **14** und der Todbereich **15** mittels einer Schlechtgrenze **19** voneinander getrennt. Die Fahrroute **24** der Arbeitsmaschine **3** beginnt an einem Bearbeitungsanfang **23** an einer nordwestlichen Stelle der Arbeitsfläche **2**. Von dort aus erstreckt sich die Fahrroute **24** zunächst entlang der Randspur **6** sowie anschließend regelmäßig entlang der in sich geraden Arbeitsspuren **8.** Die Bearbeitung der Arbeitsfläche **2** endet schließlich an dem Bearbeitungsende **16**. Hierzu wird abermals auf die Darstellung gemäß **Figur 1** verwiesen.

In Kenntnis der Netzabdeckungskarte **1** ergeben sich nunmehr mehrere Übertragungsstellen **22**, **25**, von denen jeweils eine einem der Felder **10** zugeordnet ist, die sich entlang der Gutgrenze **18** erstrecken. Die Übertragungsstellen **22** stellen diejenigen dar, die unmittelbar vor Übertritt der Arbeitsmaschine **3** von dem Gutbereich **13** in den Schlechtbereich **14** liegen, während die Übertragungsstellen **25** umgekehrt unmittelbar nach dem Übertritt der Arbeitsmaschine **3** von dem Schlechtbereich **14** in den Gutbereich **13** liegen. Die Übertragungsstellen **22** beschreiben die Stelle auf der Arbeitsfläche **2,** an der eine jeweilige Datenübertragung erfolgreich abgeschlossen sein soll, während die Übertragungsstellen **25** solche Stellen beschreiben, an denen mit einer Datenübertragung begonnen wird. Aufgrund der Einteilung des Rasters **9** in Anlehnung an die Fahrroute **24** der Arbeitsmaschine **3** ist es besonders einfach möglich, die Übertragungsstellen **22, 25** zu identifizieren, die im Hinblick auf eine möglichst aktuelle Datenhaltung für eine Datenübertragung besonders vorteilhaft sind. Dabei wird jedem Feld **10,** das an die Gutgrenze **18** angrenzt, jeweils eine Erhebungsstelle **22, 25** zugeordnet. Eine jeweilige Übertragungsstelle **22, 25** befindet sich dabei vorteilhafterweise in einem der Gutgrenze **18** zugewandten Bereich des jeweiligen Feldes **10.** Es ergibt sich, dass bei einer Positionierung einer jeweiligen Übertragungsstelle **22, 25** in der beschriebenen Weise eine Übertragung von Daten zwischen der Arbeitsmaschine **3** und der externen Sende-/Empfangseinheit möglichst spät vor Übertritt der Arbeitsmaschine **3** von dem Gutbereich **13** in den Schlechtbereich **14** bzw. möglichst früh nach Übertritt der Arbeitsmaschine **3** von dem Schlechtbereich **14** in den Gutbereich **13** erfolgt. Dabei versteht es sich, dass innerhalb des Gutbereichs **13** darüber hinaus eine Mehrzahl weiterer Übertragungsstellen vorliegen kann, die hier der Einfachheit halber in **Figur 6** nicht gezeigt sind. Diese können sich beispielsweise einem fixen Datenübertragungsplan folgend ergeben, der beispielsweise eine Datenübertragung alle zwei Minuten vorsieht.

**Figur 6** veranschaulicht mithin, wie in Kenntnis der Netzabdeckungskarte **1** die Datenübertragung zwischen der Arbeitsmaschine **3** und der externen Sende-/Empfangseinheit gesteuert wird, wobei ein Zeitfenster, innerhalb dessen keine Übertragung von Daten möglich ist, zeitlich gesehen auf ein Minimum reduziert wird. Hierdurch wird gewährleistet, dass die jeweils ausgetauschten Datensätze so aktuell wie möglich sind. Insbesondere sind die Übertragungsstellen **22**, **25** in derart angeordnet, dass eine Übertragung von Daten zwischen der Arbeitsmaschine **3** und der externen Sende-/Empfangseinheit unmittelbar vor dem Übertritt der Arbeitsmaschine **3** von dem Gutbereich **13** in den Schlechtbereich **14** abgeschlossen sowie umgekehrt unmittelbar nach dem Übertritt der Arbeitsmaschine **3** von dem Schlechtbereich **14** in den Gutbereich **13** begonnen wird. In Kenntnis der Netzabdeckungskarte **1** sowie der Fahrroute **24** ist die Steuerungseinrichtung dazu in der Lage, die Übertragungsstellen **22**, **25** entsprechend auszuwählen und die Datenübertragung in der beschriebenen Weise vorzunehmen. Insbesondere kann die Steuerungseinrichtung die letzte Datenübertragung vor Übertritt der Arbeitsmaschine **3** in den Schlechtbereich **14** in solcher Weise vornehmen, dass sie zuverlässig abgeschlossen wird. Die sich hieraus ergebenden Vorteile sind vorstehend bereits dargelegt.

Bei abermaliger Bearbeitung der Arbeitsfläche **2** können zwecks Erhebung von Informationen betreffend die verfügbare Datenübertragungsrate solche Erhebungsstellen **4** ausgewählt werden, die andere Felder **10** des Rasters **9** betreffen. Auf diese Weise kann die Genauigkeit der Netzabdeckungskarte **1**, die in dem gezeigten Beispiel in weiten Teilen mittels Interpolation zwischen Erhebungswert **11** der Erhebungsstellen **4** ermittelt wurde, erhöht werden. Weiterhin hat die fortwährende Erhebung von Informationen betreffend die Datenübertragungsrate auf der Arbeitsfläche **2** zum Vorteil, dass etwaige Veränderungen betreffend die Verfügbarkeit des jeweiligen Mobilfunknetzes erfasst werden. Entsprechend ist eine Anpassung der Steuerung der Datenübertragung im Zuge der Bearbeitung der Arbeitsfläche **2** mittels der Arbeitsmaschine **3** möglich.

In besonders vorteilhafter Weise ist es denkbar, dass mittels der auf der Arbeitsmaschine **3** angeordneten Sende-/Empfangseinheit Informationen betreffend verfügbare Datenübertragungsraten verschiedener Mobilfunknetze gleichzeitig erhoben werden. Auf diese Weise können gleichzeitig verschiedene Netzabdeckungskarten **1** für verschiedene Mobilfunknetze erstellt werden.

### Bezugszeichenliste

- 1: Netzabdeckungskarte
- 2: Arbeitsfläche
- 3: Arbeitsmaschine
- 4: Erhebungsstellen
- 5: Vorgewendespur
- 6: Randspur
- 7: Ecke
- 8: Arbeitsspur
- 9: Raster
- 10: Feld
- 11: Erhebungswert
- 12: Interpolationswert
- 13: Gutbereich
- 14: Schlechtbereich
- 15: Todbereich
- 16: Bearbeitungsende
- 17: Wende
- 18: Gutgrenze
- 19: Schlechtgrenze
- 20: Pfeil
- 21: Pfeil
- 22: Übertragungsstelle
- 23: Bearbeitungsanfang
- 24: Fahrroute
- 25: Übertragungsstelle

## Patentansprüche

1. Verfahren zur Steuerung mindestens einer Datenübertragung zwischen einer fahrenden landwirtschaftlichen Arbeitsmaschine (3) und mindestens einer externen Sende-/Empfangseinheit,
wobei sich die Arbeitsmaschine (3) auf einer landwirtschaftlichen Arbeitsfläche (2) zumindest zeitweise entlang einer Fahrroute (24) bewegt, die einem vorgegebenen Routenplan folgt,
wobei die Datenübertragung mittels mindestens eines Mobilfunknetzes vorgenommen wird,
wobei die Datenübertragung mittels einer Steuerungseinrichtung gesteuert wird,
**dadurch gekennzeichnet, dass**
mittels der Steuerungseinrichtung Informationen aus mindestens einer die Arbeitsfläche (2) zugeordneten Netzabdeckungskarte (1), die Informationen betreffend eine Abdeckung der Arbeitsfläche (2) mit dem Mobilfunknetz beinhaltet, und dem Routenplan miteinander kombiniert werden, sodass mindestens eine Datenübertragung in Abhängigkeit einer Position der Arbeitsmaschine (3) entlang ihrer Fahrroute (24) vorgenommen wird,
wobei mindestens eine Datenübertragung derart mittels der Steuerungseinrichtung geplant wird, dass sie unmittelbar vor einem Übertritt der Arbeitsmaschine (3) von einem Gutbereich (13) der Arbeitsfläche (2) in einen Schlechtbereich (14) der Arbeitsfläche (2) abgeschlossen wird, wobei in dem Gutbereich (13) gemäß der Netzabdeckungskarte (1) eine für eine zuverlässige Datenübertragung hinreichende Abdeckung des Mobilfunknetzes vorliegt und in dem Schlechtbereich (14) gemäß der Netzabdeckungskarte (1) für eine zuverlässige Datenübertragung keine hinreichende Abdeckung des Mobilfunknetzes vorliegt.

2. Verfahren nach Anspruch 1, **dadurch gekennzeichnet, dass** die Steuerungseinrichtung in Kenntnis eines Volumens eines jeweils zu übertragenden Datenpakets die Datenübertragung derart terminiert, dass sie vollständig abgeschlossen werden kann, bevor die Arbeitsmaschine (3) einen Schlechtbereich (14) der Arbeitsfläche (2) erreicht, in dem gemäß der Netzabdeckungskarte (1) für eine zuverlässige Datenübertragung keine hinreichende Abdeckung des Mobilfunknetzes vorliegt.

3. Verfahren nach Anspruch 1 oder 2, **dadurch gekennzeichnet, dass** mittels der Steuerungseinrichtung die Informationen aus der Netzabdeckungskarte (1) und dem Routenplan der Arbeitsmaschine (3) mit Informationen betreffend ein Volumen eines jeweils zu übertragenden Datenpakets kombiniert werden, wobei die Steuerungseinrichtung die Datenübertragung nur für den Fall initiiert, dass eine zu erwartende Aufenthaltszeit der Arbeitsmaschine (3) in einem Gutbereich (13) der Arbeitsfläche (2) ausreicht, um das jeweilige Datenpaket vollständig zu übertragen, bevor die Arbeitsmaschine (3) einen Schlechtbereich (14) der Arbeitsfläche (2) erreicht, wobei in dem Gutbereich (13) gemäß der Netzabdeckungskarte (1) eine für eine zuverlässige Datenübertragung hinreichende Abdeckung des Mobilfunknetzes vorliegt und in dem Schlechtbereich (14) gemäß der Netzabdeckungskarte (1) für eine zuverlässige Datenübertragung keine hinreichende Abdeckung des Mobilfunknetzes vorliegt.

4. Verfahren nach einem der Ansprüche 1 bis 3, **dadurch gekennzeichnet, dass** zumindest eine Mehrzahl von Datenübertragungen gemäß einem vorgegebenen Datenübertragungsplan zyklisch in bestimmten, vorzugsweise konstanten, Zeitabständen oder jeweils nach Zurücklegung bestimmter, vorzugsweise konstanter, Fahrdistanzen der Arbeitsmaschine (3) vorgenommen werden.

5. Verfahren nach einem der Ansprüche 1 bis 4, **dadurch gekennzeichnet, dass** mindestens eine Datenübertragung derart mittels der Steuerungseinrichtung geplant wird, dass sie unmittelbar nach einem Übertritt der Arbeitsmaschine (3) von einem Schlechtbereich (14) der Arbeitsfläche (2) in einen Gutbereich (13) der Arbeitsfläche (2) begonnen wird, wobei in dem Gutbereich (13) gemäß der Netzabdeckungskarte (1) eine für eine zuverlässige Datenübertragung hinreichende Abdeckung des Mobilfunknetzes vorliegt und in dem Schlechtbereich (14) gemäß der Netzabdeckungskarte (1) für eine zuverlässige Datenübertragung keine hinreichende Abdeckung des Mobilfunknetzes vorliegt.

6. Verfahren nach einem der Ansprüche 1 bis 5, **dadurch gekennzeichnet, dass** die Datenübertragung mittels einer auf der Arbeitsmaschine (2) befindlichen Steuerungseinrichtung und/oder mittels einer externen Steuerungseinrichtung gesteuert wird.

7. Verfahren nach einem der Ansprüche 1 bis 6, **dadurch gekennzeichnet, dass** Daten von der Arbeitsmaschine an die externe Sende-/Empfangseinheit und/oder umgekehrt übertragen werden.

## Claims

1. A method for controlling at least one transmission of data between a travelling agricultural working machine (3) and at least one external transceiver unit,
wherein the working machine (3) moves on an agricultural work area (2) at least periodically along a travel route (24) which follows a predetermined route plan,
wherein the transmission of data is carried out by means of at least one mobile phone network,
wherein the transmission of data is controlled by means of a control device,
**characterized in that**
by means of the control device, information from at least one network coverage map (1) associated with the work area (2) which contains information regarding a coverage of the work area (2) by the mobile phone network and from the route plan are combined together so that at least one transmission of data is carried out as a function of a position of the working machine (3) along its travel route (24),
wherein at least one transmission of data is planned by means of the control device in a manner such that it is completed immediately prior to a transfer of the working machine (3) from a good region (13) of the work area (2) to a poor region (14) of the work area (2), wherein in the good region (13) according to the network coverage map (1), coverage for the mobile phone network is sufficient for reliable data transmission and in the poor region (14) according to the network coverage map (1), coverage for the mobile phone network is insufficient for reliable data transmission.

2. The method according to claim 1, **characterized in that**, in the knowledge of the volume of a respective data packet to be transmitted, the control device terminates the transmission of data in a manner such that it can be completed in its entirety before the working machine (3) reaches a poor region (14) of the work area (2) in which according to the network coverage map (1), coverage for the mobile phone network is insufficient for reliable data transmission.

3. The method according to claim 1 or claim 2, **characterized in that** by means of the control device, the information from the network coverage map (1) and from the route plan for the working machine (3) can be combined with information regarding a respective volume of a data packet to be transmitted, whereupon the control device initiates the transmission of data only in the case in which an expected residence time for the working machine (3) to be in a good region (13) of the work area (2) is sufficient to transmit the respective data packet in its entirety before the working machine (3) reaches a poor region (14) of the work area (2), wherein in the good region (13) according to the network coverage map (1), coverage for the mobile phone network is sufficient for reliable data transmission and in the poor region (14) according to the network coverage map (1), coverage for the mobile phone network is insufficient for reliable data transmission.

4. The method according to one of claims 1 to 3, **characterized in that** at least a plurality of transmissions of data are carried out cyclically in accordance with a predetermined data transmission plan in specific, preferably constant time intervals or respectively after covering specific, preferably constant travel distances of the working machine (3).

5. The method according to one of claims 1 to 4, **characterized in that** at least one transmission of data is planned by means of the control device in a manner such that it is begun immediately after a transfer of the working machine (3) from a poor region (14) of the work area (2) into a good region (13) of the work area (2), wherein in the good region (13) according to the network coverage map (1), coverage for the mobile phone network is sufficient for reliable data transmission and in the poor region (14) according to the network coverage map (1), coverage for the mobile phone network is insufficient for reliable data transmission.

6. The method according to one of claims 1 to 5, **characterized in that** the transmission of data is controlled by means of a control device located on the working machine (2) and/or by means of an external control device.

7. The method according to one of claims 1 to 6, **characterized in that** data from the working machine is transmitted to the external transceiver unit and/or vice versa.

## Revendications

1. Procédé de commande d'au moins une transmission de données entre un engin de travail agricole (3) en mouvement et au moins une unité d'émission/de réception externe,
selon lequel l'engin de travail (3) se déplace sur une surface de travail agricole (2), au moins temporairement le long d'un itinéraire (24) qui suit un plan d'itinéraire prédéfini,
selon lequel la transmission de données est réalisée à l'aide d'au moins un réseau de radiocommunication mobile,
selon lequel la transmission de données est contrôlée à l'aide d'un dispositif de commande,
**caractérisé en ce que**
le dispositif de commande combine entre elles des informations provenant d'au moins une carte de couverture de réseau (1), qui est associée à la surface de travail (2) et contient des informations relatives à la couverture de la surface de travail (2) par le réseau de radiocommunication mobile, et du plan d'itinéraire, de sorte qu'au moins une transmission de données est effectuée en fonction d'une position de l'engin de travail (3), le long de son itinéraire (24),
sachant qu'au moins une transmission de données est planifiée au moyen du dispositif de commande de manière à ce qu'elle soit terminée directement avant un passage de l'engin de travail (3) d'une zone bonne (13) de la surface de travail (2) à une zone mauvaise (14) de la surface de travail (2), la couverture du réseau de radiocommunication mobile étant suffisante pour une transmission de données fiable dans la zone bonne (13) selon la carte de couverture de réseau (1), et la couverture du réseau de radiocommunication mobile n'étant pas suffisante pour une transmission de données fiable dans la zone mauvaise (14) selon la carte de couverture de réseau (1).

2. Procédé selon la revendication 1, **caractérisé en ce que** le dispositif de commande, ayant connaissance d'un volume d'un paquet de données respectifs à transmettre, fixe la durée de la transmission de données de manière à ce qu'elle puisse être complètement achevée avant que l'engin de travail (3) n'atteigne une zone mauvaise (14) de la surface de travail (2), dans laquelle la couverture du réseau de radiocommunication mobile n'est pas suffisante pour une transmission de données fiable d'après la carte de couverture de réseau (1).

3. Procédé selon la revendication 1 ou 2, **caractérisé en ce que** le dispositif de commande combine les informations provenant de la carte de couverture de réseau (1) et du plan d'itinéraire de l'engin de travail (3) et des informations relatives à un volume d'un paquet de données respectif à transmettre, le dispositif de commande déclenchant la transmission de données uniquement dans le cas où un temps de séjour attendu de l'engin de travail (3) dans une zone bonne (13) de la surface de travail (2) est suffisant pour transmettre le paquet de données concerné dans sa totalité, avant que l'engin (3) n'atteigne une zone mauvaise (14) de la surface de travail (2), sachant que dans la zone bonne (13), il existe selon la carte de couverture de réseau (1) une couverture suffisante du réseau de radiocommunication mobile pour une transmission de données fiable, et dans la zone mauvaise (14), il n'existe selon la carte de couverture de réseau (1) pas de couverture suffisante du réseau de radiocommunication mobile pour une transmission de données fiable.

4. Procédé selon l'une des revendications 1 à 3, **caractérisé en ce qu'**au moins une pluralité de transmissions de données sont réalisées selon un plan prédéfini de transmission de données, de manière cyclique et à intervalles de temps déterminés, de préférence constants, ou respectivement après avoir parcouru des distances déterminées, de préférence constantes, de l'engin de travail (3).

5. Procédé selon l'une des revendications 1 à 4, **caractérisé en ce qu'**au moins une transmission de données est planifiée à l'aide du dispositif de commande de manière à ce qu'elle commence directement après un passage de l'engin de travail (3) d'une zone mauvaise (14) de la surface de travail (2) dans une zone bonne (13) de la surface de travail (2), sachant que dans la zone bonne (13), il existe selon la carte de couverture de réseau (1) une couverture suffisante du réseau de radiocommunication mobile pour une transmission de données fiable, et dans la zone mauvaise (14), il n'existe selon la carte de couverture de réseau (1) pas de couverture suffisante du réseau de radiocommunication mobile pour une transmission de données fiable.

6. Procédé selon l'une des revendications 1 à 5, **caractérisé en ce que** la transmission de données est commandée au moyen d'un dispositif de commande se trouvant sur l'engin de travail (2) et/ou au moyen d'un dispositif de commande externe.

7. Procédé selon l'une des revendications 1 à 6, **caractérisé en ce que** des données sont transmises de l'engin de travail à l'unité d'émission/de réception externe et/ou inversement.
